# EUROPÄISCHE PATENTSCHRIFT

(11) **EP 4 078 722 B1**
(45) Veröffentlichungstag und Bekanntmachung des Hinweises auf die Patenterteilung: **14.08.2024**
(21) Anmeldenummer: 20837941.2
(22) Anmeldetag: 15.12.2020
(51) Int. Cl.: H01M 50/204, H01M 50/209, H01M 50/224, H01M 50/249, H01M 50/258, H01M 50/262, H01M 50/289, H01M 50/291, H01M 50/293, H01M 50/50, H01M 50/522, H01M 50/524

(54) **BATTERIESCHALE, TRAKTIONSBATTERIE UND KRAFTFAHRZEUG**
BATTERY SHELL, TRACTION BATTERY AND MOTOR VEHICLE
BAC À BATTERIE, BATTERIE DE TRACTION ET VÉHICULE AUTOMOBILE

(30) Priorität: 18.12.2019 DE 102019134937
(43) Veröffentlichungstag der Anmeldung: 26.10.2022
(73) Patentinhaber: Kautex Textron GmbH & Co. KG, 53229 Bonn (DE)
(72) Erfinder: LENZ, Stefan, 51469 Bergisch Gladbach (DE); WOLF, Hartmut, 53639 Königswinter (DE); WEIMER, Andreas, 53604 Bad Honnef (DE); ENKIRCH, Georg, 56414 Salz (DE)
(74) Vertreter: Richly & Ritschel Patentanwälte PartG mbB
(86) Internationale Anmeldenummer: PCT/EP2020/086133
(87) Internationale Veröffentlichungsnummer: WO 2021/122537

(56) Entgegenhaltungen:
- DE-A1- 102006 048 291
- DE-A1- 102013 217 836
- DE-A1- 102015 203 952
- DE-A1- 102016 225 662

## Beschreibung

Die vorliegende Erfindung betrifft eine Batterieschale, eine Traktionsbatterie und ein Kraftfahrzeug.

Eine Batterie, insbesondere eine Traktionsbatterie für die Energiespeicherung in einem Kraftfahrzeug, besteht aus einer Vielzahl von Bauteilen. Einem Batteriegehäuse kommt dabei unter anderem die Aufgabe zu, Batteriemodule und weitere benötigte Komponenten zu befestigen und zu schützen.

DE 10 2015 203952 A1 offenbart eine Batterieschale gemäß dem Oberbegriff von Anspruch 1. Zur Aufnahme und Ableitung von auftretenden Massenkräften ist eine sichere Fixierung von Batteriemodulen und weiteren Komponenten am Batteriegehäuse unter allen Betriebsbedingungen und über die Lebensdauer der Batterie von großer Bedeutung.

Der Erfindung liegt die Aufgabe zugrunde, dem Stand der Technik eine Verbesserung oder eine Alternative zur Verfügung zu stellen.

Die der vorliegenden Erfindung zugrundeliegende Aufgabe wird durch eine Batterieschale mit den Merkmalen des Anspruchs 1 gelöst. Vorteilhafte Ausgestaltungen der Batterieschale sind in den abhängigen Ansprüchen beschrieben.

Im Genaueren wird die der vorliegenden Erfindung zugrundeliegende Aufgabe durch eine Batterieschale gelöst, insbesondere durch eine Batterieschale einer Traktionsbatterie, wobei die Batterieschale aus Kunststoff ausgeformt ist, wobei die Batterieschale ein Befestigungssystem zur Befestigung einer Komponente mit der Batterieschale aufweist, wobei das Befestigungssystem eine Führungsleiste, ein Innenprofil und ein Befestigungselement aufweist, wobei die Führungsleiste stoffschlüssig und oder formschlüssig mit der Batterieschale verbunden ist, wobei das Innenprofil von der Führungsleiste geführt wird, wobei das Befestigungselement dazu eingerichtet ist, eine Verbindung zwischen der Komponente und dem Innenprofil herzustellen.

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Unter einer "Batterieschale" wird ein Gehäusebestandteil einer Batterie verstanden. Insbesondere ist eine Batterieschale zur Aufnahme von Komponenten einer Batterie eingerichtet, sodass diese durch die Batterieschale geschützt und/oder befestigt werden können.

Unter einer "Traktionsbatterie" wird ein Energiespeicher verstanden, insbesondere ein Energiespeicher für elektrischen Strom. Vorzugsweise ist eine Traktionsbatterie zum Einbau in sowie zum Antrieb von Elektroautos geeignet.

Unter einem "Befestigungssystem" wird ein System zur Befestigung zumindest eines Bauteils an zumindest einem anderen Bauteil verstanden. Vorzugsweise kann ein Befestigungssystem selbst eine Mehrzahl von Bauteilen aufweisen, insbesondere eine Führungsleiste, ein Innenprofil und zumindest ein Befestigungselement.

In einer bevorzugten Ausführungsform kann ein Befestigungssystem dazu geeignet sein, zumindest eine Komponente mit einer Batterieschale zu verbinden.

Unter anderem ist dabei konkret denkbar, dass ein Batteriemodul mittels einem Befestigungssystem mit einer Batterieschale verbunden werden kann. Weiterhin kann auch ein Steuerungsmodul und/oder eine Kühlvorrichtung und/oder eine elektrische Leitung und/oder dergleichen mittels einem Befestigungssystem mit der Batterieschale verbunden werden.

Alternativ ist auch denkbar, dass eine Batterieschale mit einem Befestigungssystem in einem Kraftfahrzeug befestigt werden kann.

Unter einer "Führungsleiste" wird ein Bauteil verstanden, welches zur Führung eines Innenprofils eingerichtet ist.

Bevorzugt ist eine Führungsleiste stoffschlüssig oder formschlüssig mit einer Batterieschale verbunden, insbesondere in eine Batterieschale integriert. Bevorzugt ist die Führungsleiste derart mit der Batterieschale aus Kunststoff verbunden, dass etwaig auf die Führungsleiste wirkende Kräfte und Momente auf die Batterieschale übertragen werden können.

Optional weist eine Führungsleiste einen Querschnitt auf, welcher entlang der Längserstreckungsrichtung der Führungsleiste konstant ist.

Bevorzugt besteht eine Führungsleiste überwiegend aus Metall, insbesondere aus Stahl oder Aluminium oder Kupfer.

Alternativ besteht eine Führungsleiste überwiegend aus Kunststoff, insbesondere aus Polyamid. Vorzugsweise besteht eine Führungsleiste aus einem Polymer und einem Textilgewebe, insbesondere einer Faserverstärkung und/oder einer Langfaserverstärkung und/oder einer Endlosfaserverstärkung.

Bevorzugt ist eine Führungsleiste durch Strangpressen, Strangziehen, Extrusion oder Walzen hergestellt.

Unter einem "Innenprofil" wird ein stabförmiges Bauteil verstanden, welches derart ausgeformt ist, dass es in eine Führungsleiste eingeführt werden kann, vorzugsweise in Richtung der Längserstreckung der Führungsleiste.

Bevorzugt weist das Innenprofil einen Querschnitt auf, welcher entlang der Längserstreckungsrichtung des Innenprofils überwiegend konstant ist.

In einer bevorzugten Ausführungsform korrespondieren der Querschnitt des Innenprofils und derjenige Querschnitt der Führungsleiste, welcher dafür vorgesehen ist, dass das Innenprofil in diesen eingeführt werden kann, derart, dass zwischen dem Innenprofil und der Führungsleiste kein Kraftschluss besteht, zumindest nicht solange keine Komponente über das Befestigungssystem mit der Batterieschale verbunden ist.

Vorzugsweise wird ein Innenprofil aus Metall ausgeführt, insbesondere aus Aluminium oder Stahl oder Kupfer. In einer alternativen Ausführungsform kann ein Innenprofil ebenfalls aus Kunststoff ausgeführt sein.

Ein Innenprofil wird bevorzugt durch Strangpressen, Strangziehen, Extrusion oder Walzen hergestellt.

Unter einem "Befestigungselement" wird jegliches Element verstanden, welches für die Befestigung einer Komponente eingerichtet ist, insbesondere eine Schraube, ein Gewinde, ein Gewindeeinsatz, eine Mutter, eine Unterlegscheibe, ein Gewindebolzen, eine Anschweißmutter, ein Anschweißbolzen, ein Rasthaken, ein Clip, ein Kabelbinder, eine Leitungsfixierung, eine Kabelfixierung, ein Tannenbaum-Clip oder dergleichen.

Bei einem Befestigungselement sei insbesondere an eine Gewindehülse mit einem Konus gedacht, welcher vorteilhaft eine selbstzentrierende Montage der Komponenten ermöglicht.

Unter einer "Komponente" wird hier ein Bauteil als Einzelteil oder eine aus mehreren Teilen bestehende Baugruppe verstanden, insbesondere ein Batteriemodul, ein Steuerungsmodul, eine Kühlvorrichtung, eine elektrische Leitung oder dergleichen. Weiterhin kann unter einer Komponente auch eine Rahmenstruktur verstanden werden, mittels welcher eine Batterieschale mit einem Kraftfahrzeug verbunden werden kann. Vorzugsweise ist ein Befestigungssystem demnach also dazu eingerichtet, Komponenten innerhalb der Batterieschale und/oder außerhalb der Batterieschale mit der Batterieschale zu verbinden.

Im Stand der Technik sind Traktionsbatterien mit einer Batterieschale aus Metall bekannt. Alleine die Batterieschalen weisen dabei bereits eine Vielzahl von Komponenten mit einer vergleichsweise hohen Fertigungstiefe auf. Da metallische Werkstoffe eine vergleichsweise geringe Elastizität aufweisen, ergibt sich für die Batterieschalen aus dem Stand der Technik, dass diese hohen Anforderungen an die Form- und Lagetoleranzen jedes einzelnen Bauteils aufweisen müssen. Weiterhin sind metallische Werkstoffe nur in vergleichsweise engen Grenzen umformbar, wodurch sich eine insgesamt hohe Teileanzahl für eine Traktionsbatterie aus dem Stand der Technik ergibt, wodurch der zugehörige Handlingaufwand bei der Herstellung vergleichsweise hoch ist.

Insgesamt ergeben sich hierdurch hohe Stückkosten für eine Traktionsbatterie sowie hohe Investitionskosten für die benötigten Herstellanlagen.

Abweichend zum Stand der Technik wird hier eine Batterieschale vorgeschlagen, welche aus Kunststoff ausgeformt wird.

Hierdurch lässt sich die Anzahl der für eine Batterieschale benötigten Bauteile drastisch senken, wodurch auch die Stückkosten für eine Batterieschale und die Investitionskosten für die Herstellung einer Traktionsbatterie sinken. Weiterhin kann hierdurch der Handlingaufwand bei der Herstellung einer Traktionsbatterie und damit einhergehend auch die Zykluszeit bei der Herstellung einer Batterieschale gesenkt werden.

Weiterhin wird hier konkret vorgeschlagen, dass das Batteriegehäuse ein Befestigungssystem aufweist, welches zumindest aus einer Führungsleiste, einem Innenprofil und einem Befestigungselement besteht.

Dabei wird vorgeschlagen, dass die Führungsleiste stoffschlüssig und/oder formschlüssig mit der Batterieschale verbunden ist, sodass die Führungsleiste, welche unter anderem zur Lasteinleitung der in dem Befestigungssystem aufgefangenen Lasten, insbesondere in Form von Längs- und/oder Querbeschleunigungen, in die Batterieschale dient, während der Herstellung der Batterieschale aus Kunststoff direkt mit dieser verbunden werden kann.

Hierdurch kann der Aufwand für die Herstellung, insbesondere durch die Reduktion der Anzahl von Einlegeteilen und damit einhergehend eine Reduktion der Zykluszeit sowie des Automatisierungsaufwandes, weiterhin reduziert und eine sichere Verbindung zwischen dem Befestigungssystem und der Batterieschale erreicht werden.

Weiterhin kann die Batterieschale durch die form- oder stoffschlüssige Verbindung zu der Führungsleiste versteift werden, wodurch einerseits die in das Befestigungssystem eingeleiteten Lasten gut und gleichmäßig auf die Batterieschale übertragen werden können und andererseits auch die Batterieschale als solches versteift werden kann, wodurch ein denkbarer Verzug der Batterieschale vorteilhaft reduziert werden kann.

Gemäß einer optionalen Ausführungsform kann die mechanische Verankerung einer Führungsleiste in dem Batteriegehäuse verbessert werden, indem ein Haftvermittler zwischen der Führungsleiste und der Batterieschale eingesetzt wird.

Gemäß einer weiteren optionalen Ausführungsform kann die mechanische Verankerung einer Führungsleiste in dem Batteriegehäuse verbessert werden, indem die Führungsleiste vor dem stoffschlüssigen oder formschlüssigen Verbinden mit dem Batteriegehäuse temperiert wird.

Gemäß einer weiteren optionalen Ausführungsform kann die mechanische Verankerung einer Führungsleiste in dem Batteriegehäuse verbessert werden, indem die Kontaktfläche der Führungsleiste und/oder der Batterieschale zwischen Führungsleiste und Batterieschale an ihrer Oberfläche vorstrukturiert wird.

Hier wird als unter anderem vorgeschlagen, dass die Kontaktfläche der Führungsleiste, also die Fläche die designiert mit der Batterieschale einen Formschluss eingeht, vorstrukturiert wird.

Weiterhin sei auch daran gedacht, dass die Batterieschale in einer Ausführungsform an ihrer Kontaktfläche zu der Führungsleiste, also der Fläche die designiert mit der Führungsleiste einen Formschluss eingeht, vorstrukturiert wird.

Ebenfalls ist eine Ausführungsform denkbar, bei der sowohl die Kontaktfläche der Führungsleiste als auch die Kontaktfläche der Batterieschale vorstrukturiert wird.

Unter "vorstrukturieren" wird hier verstanden, dass die Batterieschale und/oder die Führungsleiste mittels einem strukturgebenden Verfahren vorbehandelt wird oder bereits eine Vorstrukturierung aufweist, wodurch die Kontaktfläche insgesamt größer ist als die Kontaktfläche im Fall einer eben gestalteten Kontaktfläche der ansonsten gleichermaßen gestalteten Führungsleiste und/oder der ansonsten gleichermaßen gestalteten Batterieschale.

Vorteilhaft kann durch eine Batterieschale gemäß den Merkmalen des Anspruchs 1 ebenfalls eine Batterieschale mit einer ununterbrochenen Kunststoffwandung erreicht werden, welche die Dichtheit der Batterieschale gewährleisten kann.

Optional ist die Batterieschale mit einem Spritzgießverfahren oder einem Pressverfahren oder einem Blasformverfahren hergestellt.

Begrifflich sei hierzu Folgendes erläutert:
Unter einem "Spritzgießverfahren" wird ein Urformverfahren verstanden, wobei der zu verarbeitende Werkstoff, insbesondere Kunststoff, mittels einer Spritzgießmaschine verflüssigt und in eine Form, dem Spritzgießwerkzeug, unter Druck eingespritzt wird. In dem Spritzgusswerkzeug geht der Werkstoff durch Abkühlung und/oder eine Vernetzungsreaktion wieder in den festen Zustand über und kann nach dem Öffnen des Werkzeugs als Bauteil entnommen werden.

Unter einem "Pressverfahren" wird ein Urformverfahren verstanden, bei welchem die Formmasse in einem ersten Schritt in die Kavität eines zugehörigen Presswerkzeugs eingebracht wird, wobei das Presswerkzeug in einem zweiten Schritt geschlossen wird, insbesondere unter Einsatz eines Druckkolbens. Durch das Schlie-ßen des Presswerkzeugs erlangt die Formmasse die von dem Presswerkzeug vorgegebene Form. Vorzugsweise wird das Presswerkzeug temperiert. Bei einer Formmasse sei in diesem Zusammenhang insbesondere an einen thermoplastischen oder einen duroplastischen Werkstoff gedacht, welcher gegebenenfalls mit einem Fasermaterial, insbesondere Glasfaser, Kohlenstofffaser, Aramidfaser oder dergleichen, versetzt ist. Insbesondere kann unter einem Pressverfahren auch ein Direkt-Compoundier-Verfahren (D-LFT) verstanden werden, bei dem ein Fasermaterial in einen Extruder eingezogen wird, dort mit dem bereits aufgeschmolzenen Matrixpolymer, insbesondere einem Thermoplast oder einem Duroplast, imprägniert sowie in einen Spritzkolben überführt wird und anschließend als Formmasse in das Presswerkzeug eingebracht wird.

Unter einem "Blasformverfahren" wird ein Verfahren verstanden, bei dem aus einer Formmasse zunächst ein Vorformling erzeugt wird, insbesondere durch Spritzgießen oder durch Ausformen aus einer Düse, dieser in ein Blasformwerkzeug eingebracht und in dieser durch Einbringen eines Fluids ausgeformt wird. Vorteilhaft kann so erreicht werden, dass ein etabliertes Herstellverfahren für eine Batterieschale gemäß dem Anspruch 1 eingesetzt werden kann, wodurch Kosten eingespart und das Prozessrisiko des Herstellprozesses minimiert werden können.

In einer bevorzugten Ausführungsform weist die Führungsleiste einen Anteil von mindestens 90 Gew.-% Metall auf, bevorzugt einen Anteil von mindestens 95 Gew.-% Metall, besonders bevorzugt einen Anteil von mindestens 98 Gew.-% Metall.

Begrifflich sei hierzu Folgendes erläutert:
Unter einem "Metall" wird jeder Stoff verstanden, insbesondere eine Legierung, welcher in fester und/oder flüssiger Form die nachfolgenden vier charakteristischen metallischen Stoffeigenschaften aufweist: Elektrische Leitfähigkeit, Wärmeleitfähigkeit, Duktilität und metallischer Glanz. Vorzugsweise sei unter einem Metall ein Stahl oder ein Aluminium oder Kupfer verstanden.

Optional beträgt ein Metallanteil der Führungsleiste mindestens 60 Gew.-% der Führungsleiste, bevorzugt beträgt der Metallanteil der Führungsleiste mindestens 70 Gew.-% der Führungsleiste, besonders bevorzugt beträgt der Metallanteil der Führungsleiste mindestens 80 Gew.-% der Führungsleiste.

Unter anderem wird hier vorgeschlagen, dass die Führungsleiste im Wesentlichen aus einem Werkstoff mit einer hohen Oberflächenhärte, insbesondere Rockwellhärte, besteht, sodass ein durch ein Befestigungselement aufgebauter Kraftschluss zwischen einer Komponente und der korrespondierenden Kontaktoberfläche der Führungsleiste nicht zu einer Beschädigung der Führungsleiste führt.

Insbesondere wird vorgeschlagen, dass die Führungsleiste aus einem metallischen Werkstoff, vorzugsweise Aluminium, extrudiert werden kann. Auf diese Weise lässt sich vergleichsweise einfach ein Querschnitt der Führungsleiste mit einer vergleichsweise komplexen Geometrie herstellen. Dies ermöglicht eine weitreichende Anpassung des Querschnitts der Führungsleiste auf die Bedürfnisse des Befestigungssystems. Insbesondere kann durch Extrusion einer Führungsleiste eine Führungsleiste mit einem Querschnitt erreicht werden, welcher sowohl in einem ersten Bereich einen Hinterschnitt für die formschlüssige Verbindung von Batterieschale und Führungsleiste als auch in einem zweiten Bereich einen Hinterschnitt für eine formschlüssige Verbindung von Innenprofil und Führungsleiste aufweist.

Weiterhin sei ebenso daran gedacht, dass eine im Wesentlichen metallisch ausgeführte Führungsleiste als Erdungspfad für die mit der Führungsleiste zumindest mittelbar verbundenen Komponenten mit der Fahrzeugmasse zu benutzen.

Vorteilhaft kann so einerseits eine Führungsleiste mit einem harten Material erreicht werden, welches nicht zu plastischen Verformungen aufgrund eines Kraftschluss neigt und gleichzeitig ein guter elektrischer Leiter ist, sodass die Führungsleiste vorteilhaft auch als Erdungspfad verwendet werden kann. Außerdem kann so vorteilhaft erreicht werden, dass eine Führungsleiste extrudiert werden kann und so auch komplexe funktionale Querschnitte für die Führungsleiste möglich sind.

Ausdrücklich sei darauf hingewiesen, dass die vorstehenden Werte für den Metallanteil der Führungsleiste nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs für den Metallanteil der Führungsleiste liefern.

Gemäß einer optionalen Ausführungsform weist die Führungsleiste einen Anteil von mindestens 90 Gew.-% Kunststoff auf, bevorzugt einen Anteil von mindestens 95 Gew.-% Kunststoff, besonders bevorzugt einen Anteil von mindestens 98 Gew.-% Kunststoff.

Begrifflich sei hierzu Folgendes erläutert:
Unter einem "Kunststoff" wird ein Werkstoff verstanden, der hauptsächlich aus Makromolekülen besteht. Insbesondere wird unter einem Kunststoff ein Thermoplast, ein Duroplast oder ein Elastomer verstanden.

Optional beträgt ein Kunststoffanteil der Führungsleiste mindestens 60 Gew.-% der Führungsleiste, bevorzugt beträgt der Kunststoffanteil der Führungsleiste mindestens 70 Gew.-% der Führungsleiste, besonders bevorzugt beträgt der Kunststoffanteil der Führungsleiste mindestens 80 Gew.-% der Führungsleiste.

Hier wird nun alternativ eine Führungsleiste vorgeschlagen, die überwiegend aus Kunststoff besteht, insbesondere aus Polyamid. Vorzugsweise sei hierbei auch an eine Führungsleiste gedacht, die neben einem Polymer auch einen Faseranteil aufweist.

Weiterhin sei hier auch konkret daran gedacht, dass die hier vorgeschlagene Führungsleiste einen Kunststoff aufweist, der kompatibel ist zu dem Kunststoff aus dem die Batterieschale ausgeformt wird, sodass ein Stoffschluss zwischen der Batterieschale und der Führungsleiste erreicht werden kann.

Vorteilhaft kann so durch die Verwendung von Kunststoff eine vergleichsweise leichte Führungsleiste erreicht werden, die einen komplexen funktionalen Querschnitt aufweisen kann und mit etablierten Herstellverfahren hergestellt werden kann. Weiterhin kann hierdurch vorteilhaft mittelbar eine Batterieschale erreicht werden, die stoffschlüssig in die Führungsleiste übergeht.

Ausdrücklich sei darauf hingewiesen, dass die vorstehenden Werte für den Kunststoffanteil der Führungsleiste nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs für den Kunststoffanteil der Führungsleiste liefern.

Bevorzugt weist das Innenprofil einen Anteil von mindestens 90 Gew.-% Metall auf, bevorzugt einen Anteil von mindestens 95 Gew.-% Metall, besonders bevorzugt einen Anteil von mindestens 98 Gew.-% Metall.

Optional beträgt ein Metallanteil des Innenprofils mindestens 60 Gew.-% des Innenprofils, bevorzugt beträgt der Metallanteil des Innenprofils mindestens 70 Gew.-% des Innenprofils, besonders bevorzugt beträgt der Metallanteil des Innenprofils mindestens 80 Gew.-% des Innenprofils.

Hier wird nun konkret ein Innenprofil vorgeschlagen, welches im Wesentlichen aus Metall besteht, insbesondere aus Stahl, Aluminium oder Kupfer.

Vorteilhaft kann so ein durch Verwendbarkeit etablierter Herstellungsverfahren, insbesondere Extrudieren und Walzen, einfach herstellbares Innenprofil erreicht werden, welches einerseits kostengünstig ist und andererseits eine hohe Härte aufweist, sodass punktförmig über ein Befestigungselement eingeleitete Kräfte gut auf die Struktur eines Befestigungssystems und damit mittelbar auch auf die Batterieschale übertragen werden können. Weiterhin kann so vorteilhaft erreicht werden, dass das Innenprofil als Erdungspfad für die mit dem Befestigungssystem befestigten Komponenten verwendet werden kann.

Ausdrücklich sei darauf hingewiesen, dass die vorstehenden Werte für den Metallanteil des Innenprofils nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs für den Metallanteil des Innenprofils liefern.

Optional ist zumindest ein Befestigungselement in das Innenprofil eingepresst.

Begrifflich sei hierzu Folgendes erläutert:
Unter "einpressen" wird ein Fügeverfahren verstanden, bei dem ein Fügeteil und ein Fügepartner beim Fügen im Wesentlichen nur elastisch verformt werden und nach dem Fügen ein ungewolltes Lösen von Fügeteil und Fügepartner durch Kraftschluss verhindert wird. Vorzugsweise können zwischen Fügeteil und Fügepartner Längs- und Querkräfte kraftschlüssig übertragen werden.

Konkret sei hier etwa an eine Gewindehülse gedacht, die in ein Innenprofil eingepresst wird, wodurch das Befestigungselement, insbesondere die Gewindehülse, unverlierbar mit dem Innenprofil verbunden werden kann. Weiterhin kann so vorteilhaft erreicht werden, dass die in das Befestigungselement punktförmig eingeleiteten Kräfte, insbesondere Kräfte mit einem zuweilen hohen Dynamikanteil, gut auf das Innenprofil übertragen werden können.

Gemäß einer bevorzugten Ausführungsform weist das Innenprofil gegenüber der Führungsleiste zumindest einen translatorischen Freiheitsgrad auf, bevorzugt zumindest zwei translatorische Freiheitsgrade, besonders bevorzugt drei translatorische Freiheitsgrade.

Begrifflich sei hierzu Folgendes erläutert:
Unter einem "translatorischen Freiheitsgrad" wird eine translatorische Bewegungsfreiheit eines Körpers im Raum in einer Richtung verstanden.

Hier wird konkret unter anderem vorgeschlagen, dass zwischen der Führungsleiste und dem Innenprofil kein Kraftschluss besteht, zumindest so lange über kein korrespondierendes Befestigungselement eine Kraft in das Innenprofil eingeleitet wird.

Hierdurch kann das Innenprofil einfach in die Führungsleiste eingeführt werden.

Weiterhin wird vorgeschlagen, dass das Innenprofil mit zumindest einem translatorischen Freiheitsgrad, bevorzugt zwei translatorischen Freiheitsgraden und besonders bevorzugt drei translatorischen Freiheitsgraden in der Führungsleiste gelagert ist. Hierdurch entsteht eine Beweglichkeit zwischen Innenprofil und Führungsleiste, welche bei der Montage der Komponenten für einen Toleranzausgleich zwischen Komponente und Batterieschale verwendet werden kann, sodass die Montagezeit für eine Traktionsbatterie gesenkt werden kann.

Vorteilhaft kann die Montage einer Traktionsbatterie erleichtert werden und die von der Batterieschale geforderte Form- und Lagetoleranz erhöht werden, sodass auch die Herstellkosten für die aus Kunststoff ausgeformte Batterieschale reduziert werden können.

Eine bevorzugte Ausführungsform kann dadurch realisiert werden, dass das Innenprofil und/oder die Führungsleiste eine elektrisch leitfähige Verbindung zwischen der Komponente und der Fahrzeugmasse aufweist.

Begrifflich sei hierzu Folgendes erläutert:
Unter einer "elektrisch leitfähige Verbindung" wird jede Verbindung zwischen zwei Körpern verstanden, welche von einem elektrischen Strom durchflossen werden kann.

Unter einer "Fahrzeugmasse" wird ein für elektrischen Strom leitfähiger Körper verstanden, welcher als Bezugspotential für alle Signal- und Betriebsspannungen zugeordnet ist.

Vorteilhaft kann so eine Funktionsintegration vorgenommen werden, sodass die Funktionen Befestigung und Erdung der Komponenten von dem Befestigungssystem übernommen werden können.

Vorteilhaft können so Bauteile eingespart und die Montagezeiten reduziert werden, wodurch sich insgesamt Kosteneinsparungen ergeben.

Nach einem zweiten Aspekt der Erfindung löst die Aufgabe eine Traktionsbatterie, insbesondere eine Traktionsbatterie für ein Kraftfahrzeug, aufweisend eine Batterieschale mit den Merkmalen des Anspruchs 1, wobei vorzugsweise Ausführungsformen durch eine Batterieschale mit den Merkmalen eines von dem Anspruch 1 abhängigen Anspruch erreicht werden können.

Es versteht sich, dass sich die vorstehend beschriebenen Vorteile einer Batterieschale unmittelbar auf eine Traktionsbatterie, insbesondere eine Traktionsbatterie für ein Kraftfahrzeug, erstrecken, welche eine derartige Batterieschale aufweist.

Es sei ausdrücklich darauf hingewiesen, dass der Gegenstand des zweiten Aspekts mit dem Gegenstand der vorstehenden Aspekte der Erfindung vorteilhaft kombinierbar ist, und zwar sowohl einzeln oder in beliebiger Kombination kumulativ.

Nach einem dritten Aspekt der Erfindung löst die Aufgabe ein Kraftfahrzeug aufweisend eine Batterieschale mit den Merkmalen des Anspruchs 1, wobei vorzugsweise Ausführungsformen durch eine Batterieschale mit den Merkmalen eines von dem Anspruch 1 abhängigen Anspruch erreicht werden können.

Begrifflich sei hierzu Folgendes erläutert:
Unter einem "Kraftfahrzeug" wird ein durch einen Motor angetriebenes Fahrzeug verstanden. Vorzugsweise ist ein Kraftfahrzeug nicht an eine Schiene gebunden oder zumindest nicht dauerhaft spurgebunden.

Es versteht sich, dass sich die vorstehend beschriebenen Vorteile einer Batterieschale unmittelbar auf ein Kraftfahrzeug erstrecken, welches eine derartige Batterieschale aufweist.

Es sei ausdrücklich darauf hingewiesen, dass der Gegenstand des dritten Aspekts mit den Gegenständen der vorstehenden Aspekte der Erfindung vorteilhaft kombinierbar ist, und zwar sowohl einzeln oder in beliebiger Kombination kumulativ.

Weitere Vorteile, Einzelheiten und Merkmale der Erfindung ergeben sich nachfolgend aus den erläuterten Ausführungsbeispielen. Dabei zeigen im Einzelnen:
- Figur 1:: schematisch eine Batterieschale einer Traktionsbatterie gemäß dem Stand der Technik, wobei die Batterieschale im Wesentlichen aus Metall besteht;
- Figur 2:: schematisch eine Detailansicht einer Batterieschale gemäß dem Stand der Technik;
- Figur 3:: schematisch eine Batterieschale aus Kunststoff aufweisend ein Befestigungssystem;
- Figur 4:: schematisch ein Befestigungssystem für eine Batterieschale aus Kunststoff mit einem bodennah angeordneten Befestigungssystem;
- Figur 5:: schematisch eine schematisch ein Befestigungssystem für eine Batterieschale aus Kunststoff, wobei das Befestigungssystem in einer erhöhten Anordnung ausgeführt ist;
- Figur 6:: schematisch im Schnitt ein Befestigungssystem;
- Figur 7:: schematisch eine Detailansicht eines in eine Batterieschale integrierten Befestigungssystems; und
- Figur 8:: schematisch eine weitere Detailansicht eines in eine Batterieschale integrierten Befestigungssystems.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

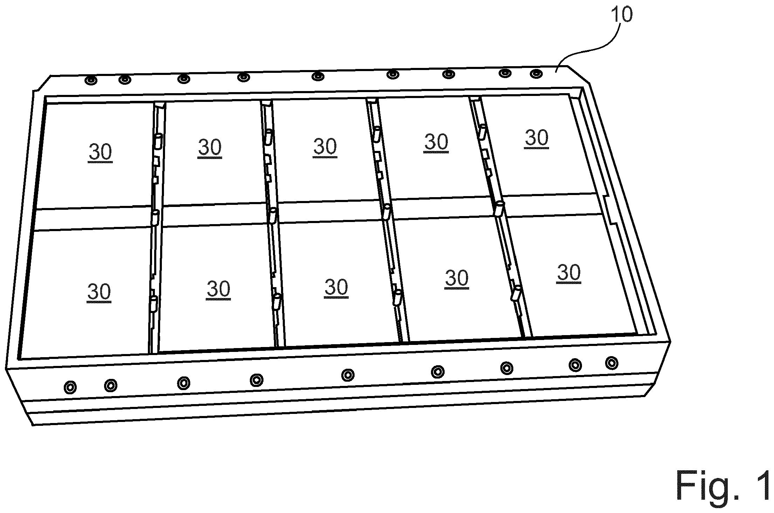

Eine Batterieschale 10 einer Traktionsbatterie (nicht bezeichnet) gemäß dem Stand der Technik in Figur 1 ist im Wesentlichen aus Metall ausgeführt.

Die Batterieschale 10 ist dazu eingerichtet, die Komponenten 30 zu befestigen und zu schützen. Zur Aufnahme und Ableitung etwaig auftretender Massenkräfte, insbesondere bei der Längs- und/oder Querbeschleunigung eines mit einer Traktionsbatterie (nicht bezeichnet) ausgestatteten Fahrzeugs (nicht dargestellt) ist eine sichere Fixierung der Komponenten 30 an der Batterieschale 10 unter allen Betriebsbedingungen und über die Lebensdauer einer Traktionsbatterie (nicht bezeichnet) von großer Bedeutung. Dies gilt insbesondere für Komponenten 30, welche eine hohes Gewicht aufweisen.

Die Komponenten 30 der Traktionsbatterie (nicht bezeichnet) sind an der Batterieschale 10 in Figur 1 mittels einer Vielzahl von Befestigungselementen (nicht bezeichnet), insbesondere durch Schrauben, befestigt. Aufgrund der hohen Anzahl an zu befestigenden Komponenten 30, wird eine hohe Anzahl an Befestigungselementen (nicht bezeichnet) zur Befestigung der Komponenten 30 mit der Batterieschale 10 benötigt.

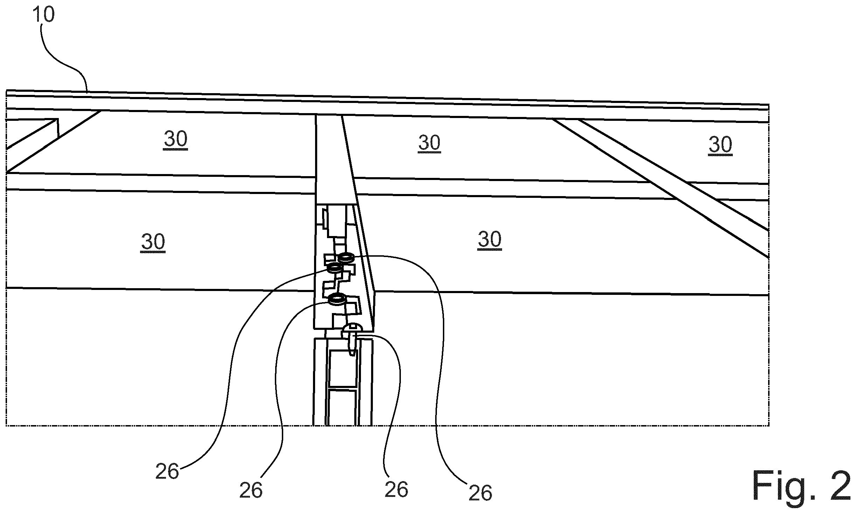

Die Traktionsbatterie (nicht bezeichnet) in Figur 2 ist im Wesentlichen derart ausgeführt, dass die Komponenten 30 mittels Befestigungselementen 26 in Form von Schrauben an der Batterieschale 10 befestigt sind. Das Batteriegehäuse 10 ist dabei im Wesentlichen aus Metall sowie in Rahmenbauweise gefertigt, sodass die Befestigungselemente 26 in Form von Schrauben 26 in einen Metallrahmen (nicht bezeichnet) eingeschraubt werden, insbesondere in einen Querträger (nicht bezeichnet) eines Metallrahmens (nicht bezeichnet).

Da bei derartigen im Stand der Technik bekannten Lösungen die Einhaltung enger Toleranzen für jedes Befestigungselement 26 wichtig ist, besteht ein hoher Fertigungsaufwand, welcher sich in Form von hohen Investitionskosten und Stückkosten niederschlägt.

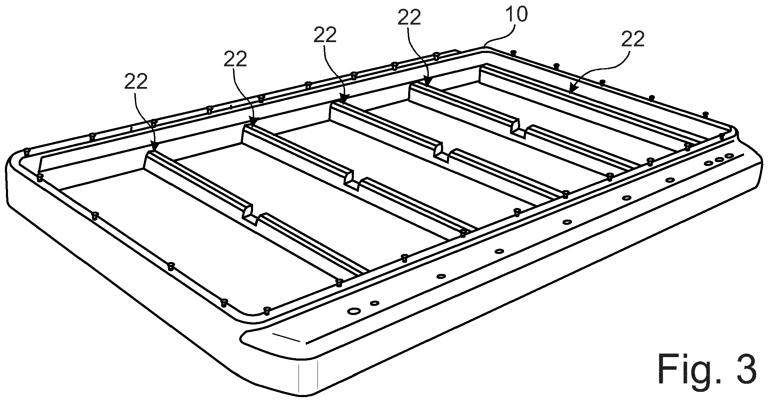

Die erfindungsgemäße Batterieschale 10 in Figur 3 ist im Wesentlichen aus Kunststoff ausgeformt. Dabei kann der Kunststoff sowohl einlagig als auch mehrlagig ausgeformt sein. Insbesondere kann die Batterieschale 10 eine Barriereschicht (nicht dargestellt) aufweisen.

Vorzugsweise wird die Batterieschale 10 in Figur 3 mittels einem Spritzgießverfahren, einem Pressverfahren, einem Blasformverfahren oder dergleichen ausgeformt.

Die Batterieschale 10 weist eine Mehrzahl von Führungsleisten 22 auf, welche zur Befestigung von Komponenten (nicht dargestellt) mit der Batterieschale 10 eingerichtet sind.

Die Führungsleisten 22 sind auf Querträgern (nicht bezeichnet) und damit erhöht gegenüber dem Boden (nicht bezeichnet) der Batterieschale 10 angeordnet. Die Querträger (nicht bezeichnet) sind ebenfalls aus Kunststoff und gemeinsam mit der Batterieschale 10 ausgeformt. Die erhöhte Ausführung der Querträger (nicht bezeichnet) kann die Montage der Komponenten (nicht dargestellt) vereinfachen und dabei unterstützen, dass die Komponenten (nicht dargestellt) beim Auftreten von Längs- und/oder Querkräften nicht gegenüber der Batterieschale 10 verrutschen können.

Insbesondere sei hier unter anderem konkret daran gedacht, dass die Führungsleisten 22 über einen Formschluss und/oder einen Stoffschluss mit der Batterieschale 10 verbunden sind. Ein Formschluss zwischen einer Führungsleiste 22 und der Batterieschale 10 kann insbesondere durch eine physische Verkrallung des Kunststoffs, aus dem die Batterieschale 10 hergestellt wird, mit der Führungsleiste 22 bewerkstelligt werden. Insbesondere kann die Führungsleiste 22 hierzu einen Hinterschnitt (nicht dargestellt) aufweisen.

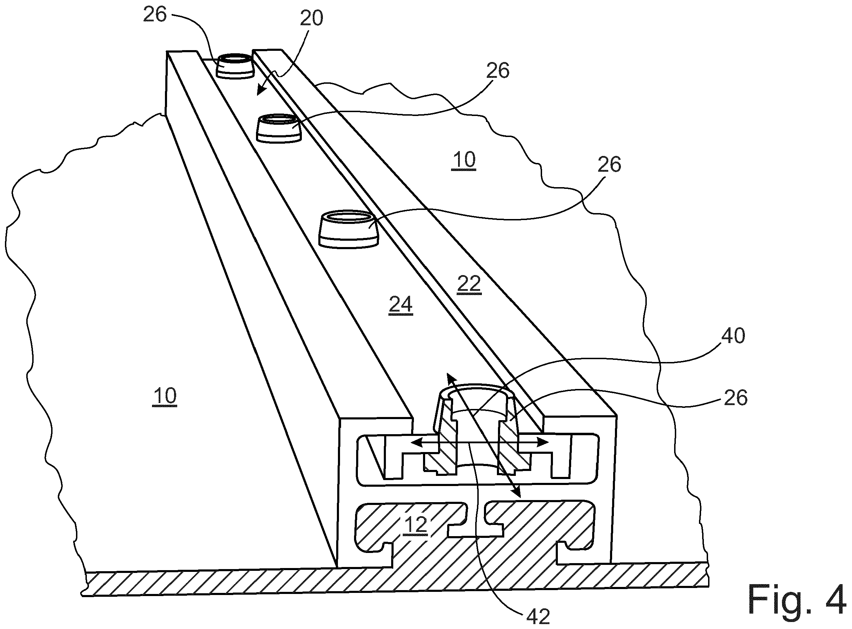

Das Befestigungssystem 20 in Figur 4 besteht im Wesentlichen aus einer Führungsleiste 22, welche mittels Formschluss mit der Batterieschale 10 verbunden ist, einem Innenprofil 24 und einer Mehrzahl von Befestigungselementen 26.

Der Formschluss zwischen der Führungsleiste 22 und der Batterieschale 10 ist mittels eines Hinterschnitts (nicht bezeichnet) in der Führungsleiste 22 hergestellt. Der Hinterschnitt (nicht bezeichnet) ist dabei derart ausgeformt, dass der die Batterieschale 10 ausformende Kunststoff beim Ausformen der Batterieschale 10 in einen Bereich der Führungsleiste 22 eindringen kann und den Hinterschnitt (nicht bezeichnet) der Führungsleiste 22 dabei umströmen kann. Beim Aushärten des Kunststoffs ergibt sich auf diese Weise eine physische Verkrallung von Batterieschale 10 und Führungsleiste 22.

Die Kunststoffwandung (nicht bezeichnet) der Batterieschale 10 ist im Bereich des Befestigungssystems 20 ohne Unterbrechung ausgeführt, wodurch eine Dichtheit der Batterieschale 10 gewährleistet werden kann.

Die Anordnung zwischen Batterieschale 10 und Befestigungssystem 20 ist derart ausgeführt, dass die Führungsleiste 22 bodennah an der Batterieschale 10 angeordnet ist.

Das Innenprofil 24 ist vorzugsweise metallisch ausgeführt, kann alternativ aber auch aus Kunststoff ausgeführt sein.

Sofern das Innenprofil 24 aus Metall ausgeführt wird, kann es als Erdungspfad genutzt werden, wodurch die zumindest mittelbar miteinander verbundenen Komponenten (nicht dargestellt) mittels des Innenprofils 24 mit der Kraftfahrzeugmasse elektrisch verbunden werden können.

Alternativ kann auch eine aus Metall ausgeführte Führungsleiste 22 als Erdungspfad für die Komponenten (nicht dargestellt) verwendet werden.

Das Innenprofil 24 ist derart gestaltet, dass es in Längsrichtung in die Führungsleiste eingeführt werden kann. Vorzugsweise ist das räumliche Spiel zwischen Innenprofil 24 und Führungsleiste 22 dabei derart ausgeführt, dass sich zwischen dem Innenprofil 24 und der Führungsleiste 22 zumindest ein translatorischer Freiheitsgrad 40, 42 bildet, sodass zwischen Innenprofil 24 und Führungsleiste 22 kein Kraftschluss besteht und das Innenprofil 24 zumindest in einer Richtung innerhalb der Führungsleiste 22 verschoben werden kann.

In einer bevorzugten Ausführungsform weist das Innenprofil 24 gegenüber der Führungsleiste 22 zumindest zwei translatorische Freiheitsgrade 40, 42, besonders bevorzugt drei translatorische Freiheitsgrade 40, 42 auf, sodass das Innenprofil 24 innerhalb der Führungsleiste 22 in einem begrenzten Bereich in zumindest zwei Raumrichtungen, bevorzugt sogar in drei Raumrichtungen, frei bewegt werden kann, wodurch jeglicher Kraftschluss zwischen Innenprofil 24 und Führungsleiste 22 lediglich von einer Verbindung zwischen einer Komponente (nicht dargestellt) und dem Innenprofil 24 und einer damit einhergehenden Verspannung zwischen der Führungsleiste 22 und dem Innenprofil 24 herrühren kann, insbesondere durch eine zumindest mittelbare Verschraubung zwischen einer Komponente (nicht abgebildet) und dem Innenprofil 24, vorzugsweise durch eine Verschraubung zwischen einem Befestigungselement 26 und einer Komponente (nicht dargestellt).

Bei der Herstellung der Batterieschale 10 kann vorgesehen sein, dass vor dem Ausformen der Batterieschale 10 aus Kunststoff das Innenprofil 24 in die Führungsleiste 22 eingeführt wird.

Das Innenprofil 24 kann ein oder mehrere Befestigungselemente 26 aufweisen. Ein Befestigungselement 26 kann vorzugsweise ein in dem Innenprofil 24 ausgeformtes Innengewinde (nicht dargestellt) sein. Bevorzugt kann ein Befestigungselement 26 auch ein Gewindeeinsatz 26 sein. Ein Befestigungselement 26 ist bevorzugt in das Innenprofil 24 eingepresst.

Vorzugsweise weist ein Befestigungselement 26 einen Konus auf, welcher zur Zentrierung zwischen dem Befestigungselement 26 und einer Komponente (nicht dargestellt) eingerichtet ist, wodurch auch die Montage einer Traktionsbatterie (nicht dargestellt) erleichtert werden kann, insbesondere an der Verbindungsstelle zwischen Komponente (nicht dargestellt) und Befestigungselement 26.

Bevorzugt weist das Befestigungselement 26 einen Hinterschnitt (nicht bezeichnet) auf, welcher dazu eingerichtet ist, eine physische Verkrallung mit dem Innenprofil 24 einzugehen, insbesondere durch die feste Verbindung zu einer mittelbar mit dem Befestigungselement 26 befestigten Komponente (nicht dargestellt) und der damit einhergehenden Verspannung zwischen Befestigungselement 26 und Innenprofil 24. Ein derartiger Hinterschnitt (nicht bezeichnet) an dem Befestigungselement 26 kann weiterhin dazu führen, dass das Befestigungselement 26 unverlierbar mit dem Befestigungssystem 20 verbunden ist, insbesondere solange das Innenprofil 24 nicht aus der Führungsleiste 22 herausgezogen wird.

Insgesamt ist das Befestigungssystem 20 dazu eingerichtet, eine sichere und dauerhafte Verbindung zwischen einer Komponente (nicht dargestellt) und einer Batterieschale 10 zu ermöglichen, wobei etwaige Toleranzen (nicht dargestellt) zwischen einer Komponente (nicht dargestellt) und der Batterieschale 10 mittels dem Befestigungssystem 20 ausgeglichen werden können, insbesondere mittels einem translatorischen Freiheitsgrad 40, 42 zwischen Führungsleiste 22 und Innenprofil 24.

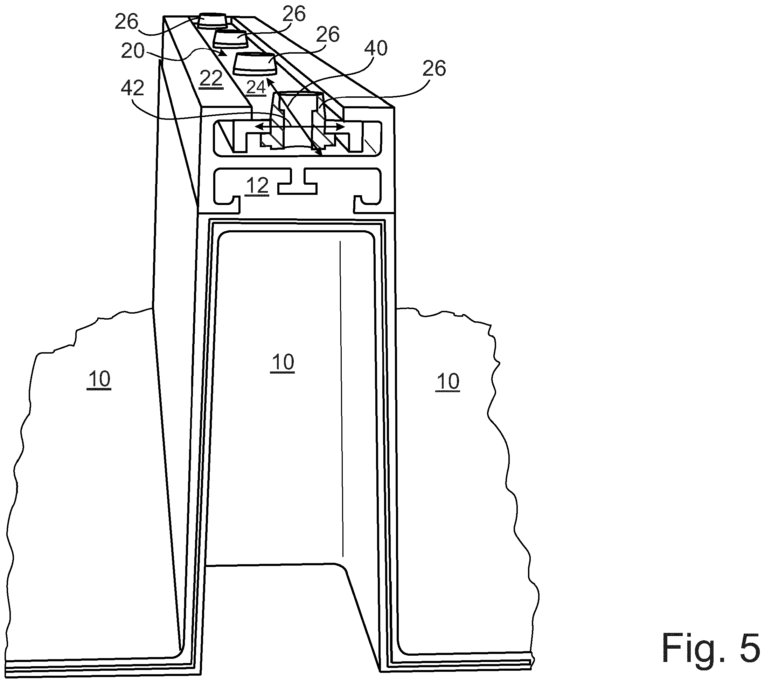

Das Befestigungssystem 20 in Figur 5 besteht im Wesentlichen aus einer Führungsleiste 22, welche mittels Formschluss mit der Batterieschale 10 verbunden ist, einem Innenprofil 24 und einer Mehrzahl von Befestigungselementen 26.

Die Führungsleiste 22 in Figur 5 ist abweichend zu der Führungsleiste 22 in Figur 4 derart angeordnet, dass die Führungsleiste 22 erhöht gegenüber dem Boden (nicht bezeichnet) der Batterieschale 10 angeordnet ist.

Der Kunststoff der Batterieschale 10 ist mehrlagig (nicht bezeichnet) ausgeführt und weist insbesondere eine Barriereschicht (nicht bezeichnet) auf, welche dazu eingerichtet ist eine Permeation eines Stoffes aus der Batterieschale in die Umgebung der Batterie oder aus der Umgebung der Batterie in die Batterie zu verhindern.

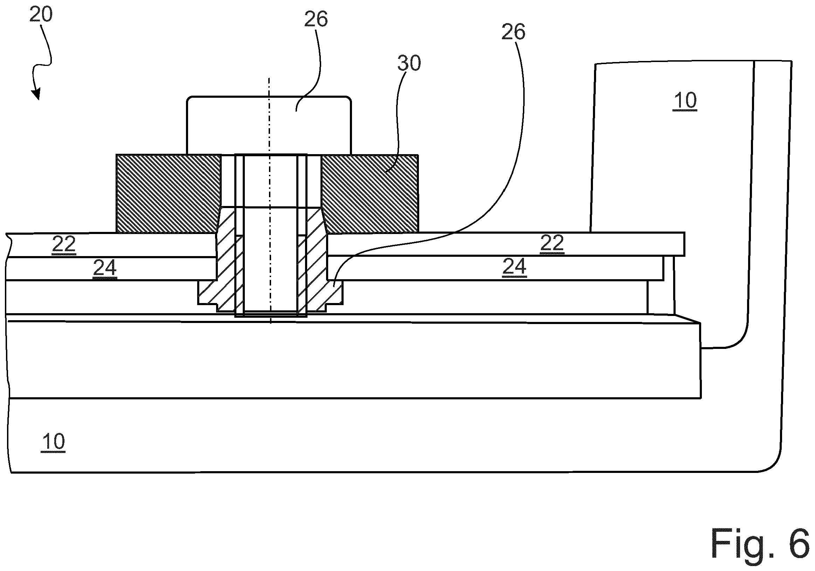

Das Befestigungssystem 20 in Figur 6 weist im Wesentlichen eine Führungsleiste 22 (im Schnitt dargestellt), ein Innenprofil 24 (im Schnitt dargestellt) und ein Befestigungselement 26 auf.

Das Befestigungssystem 20 ist mittels einem Formschluss zwischen der Batterieschale 10 und der Führungsleiste 22 mit der Batterieschale 10 verbunden.

Das Befestigungselement 26 und die Komponente 30 weisen einen zueinander korrespondierenden Konus (nicht bezeichnet) auf, welcher eine Zentrierung zwischen Komponente 30 und Befestigungselement 26 unterstützt, wodurch die Montage der Komponente 30 vereinfacht werden kann. Hierzu steht die Gewindehülse 26 über die Auflagefläche (nicht bezeichnet) auf der Oberseite (nicht bezeichnet) der Führungsleiste 22 hinaus und ist somit dazu eingerichtet, in die Komponente 30 formschlüssig einzudringen.

Vorzugsweise besteht das Befestigungselement 26 aus einer Gewindehülse 26 und einer Schraube 26.

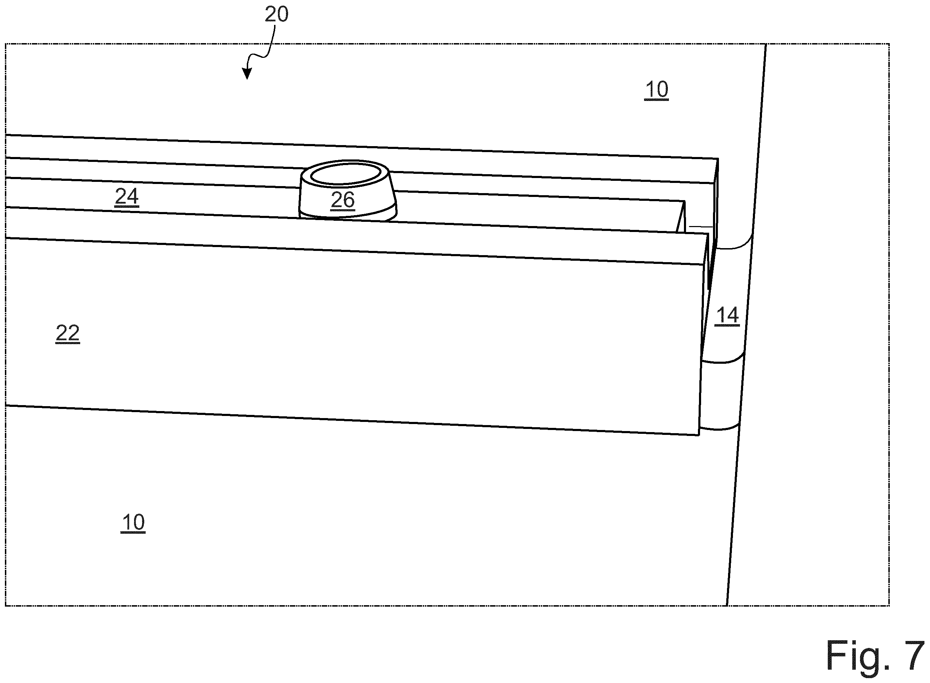

Das Befestigungssystem 20 in Figur 7 besteht im Wesentlichen aus einer Führungsleiste 22, welche mittels Formschluss mit der Batterieschale 10 verbunden ist, einem Innenprofil 24 und einem Befestigungselement 26.

Beim Ausformen der Batterieschale 10 aus Kunststoff ist das formgebende Werkzeug (nicht dargestellt) an dem Ende der Führungsleiste 22 derart ausgeformt, dass ein Übergangsbereich 14 zwischen der Wand (nicht bezeichnet) der Batterieschale 10 und der Führungsleiste 22 entsteht. Auf diese Weise kann vorteilhaft verhindert werden, dass Kunststoff beim Ausformen der Batterieschale 10 in den Bereich (nicht bezeichnet) des Befestigungssystems 20 eintritt, in dem das Innenprofil 24 von der Führungsleiste 22 geführt wird.

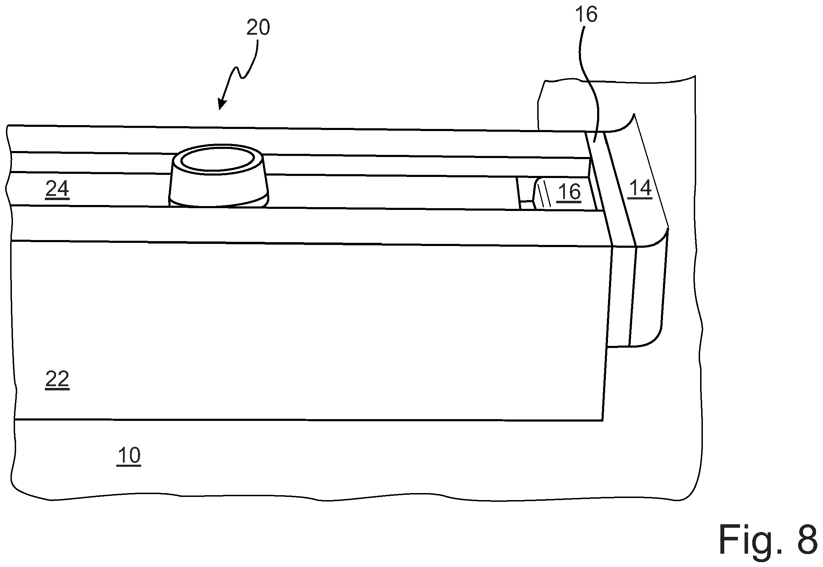

Das Befestigungssystem 20 in Figur 8 besteht im Wesentlichen aus einer Führungsleiste 22, welche mittels Formschluss mit der Batterieschale 10 verbunden ist, einem Innenprofil 24 und einem Befestigungselement 26.

Vor dem Ausformen der Batterieschale 10 ist die Führungsleiste 22 mit einem Stopfen 16 seitlich verschlossen worden, damit beim Ausformen der Batterieschale 10 aus Kunststoff kein Kunststoff in den Bereich (nicht bezeichnet) des Befestigungssystems 20 eintritt, in dem das Innenprofil 24 von der Führungsleiste 22 geführt wird.

Vorzugsweise ist der Stopfen 16 aus einem zu dem Kunststoff der Batterieschale 10 kompatiblen Kunststoff, sodass im Bereich des Stopfens ein Stoffschluss zwischen der Batterieschale 10 und dem Stopfen 16 erreicht werden kann.

### Bezugszeichenliste

- 10: Batterieschale
- 12: Verankerung
- 14: Übergangsbereich
- 16: Stopfen
- 20: Befestigungssystem
- 22: Führungsleiste
- 24: Innenprofil
- 26: Befestigungselement
- 30: Komponente
- 40: translatorischer Freiheitsgrad
- 42: translatorischer Freiheitsgrad

## Patentansprüche

1. Batterieschale (10), insbesondere Batterieschale (10) einer Traktionsbatterie, wobei die Batterieschale (10) aus Kunststoff ausgeformt ist, wobei die Batterieschale (10) ein Befestigungssystem (20) zur Befestigung einer Komponente (30) mit der Batterieschale (10) aufweist,
**dadurch gekennzeichnet, dass**
das Befestigungssystem (20) eine Führungsleiste (22), ein Innenprofil (24) und ein Befestigungselement (26) aufweist, wobei die Führungsleiste (22) stoffschlüssig und oder formschlüssig mit der Batterieschale (10) verbunden ist, wobei das Innenprofil (24) von der Führungsleiste (22) geführt wird, wobei das Befestigungselement (26) dazu eingerichtet ist, eine Verbindung zwischen der Komponente (30) und dem Innenprofil (24) herzustellen.

2. Batterieschale (10) nach Anspruch 1, **dadurch gekennzeichnet, dass** die Batterieschale (10) mit einem Spritzgießverfahren oder einem Pressverfahren oder einem Blasformverfahren hergestellt ist.

3. Batterieschale (10) nach einem der Ansprüche 1 oder 2, **dadurch gekennzeichnet, dass** die Führungsleiste (22) einen Anteil von mindestens 90 Gew.-% Metall aufweist, bevorzugt einen Anteil von mindestens 95 Gew.-% Metall, besonders bevorzugt einen Anteil von mindestens 98 Gew.-% Metall.

4. Batterieschale (10) nach einem der Ansprüche 1 oder 2, **dadurch gekennzeichnet, dass** die Führungsleiste (22) einen Anteil von mindestens 90 Gew.-% Kunststoff aufweist, bevorzugt einen Anteil von mindestens 95 Gew.-% Kunststoff, besonders bevorzugt einen Anteil von mindestens 98 Gew.-% Kunststoff.

5. Batterieschale (10) nach einem der vorstehenden Ansprüche, **dadurch gekennzeichnet, dass** das Innenprofil (24) einen Anteil von mindestens 90 Gew.-% Metall aufweist, bevorzugt einen Anteil von mindestens 95 Gew.-% Metall, besonders bevorzugt einen Anteil von mindestens 98 Gew.-% Metall.

6. Batterieschale (10) nach einem der vorstehenden Ansprüche, **dadurch gekennzeichnet, dass** zumindest ein Befestigungselement (26) in das Innenprofil (24) eingepresst ist.

7. Batterieschale (10) nach einem der vorstehenden Ansprüche, **dadurch gekennzeichnet, dass** das Innenprofil (24) gegenüber der Führungsleiste (22) zumindest einen translatorischen Freiheitsgrad (40, 42) aufweist, bevorzugt zumindest zwei translatorische Freiheitsgrade (40, 42), besonders bevorzugt drei translatorische Freiheitsgrade (40, 42).

8. Batterieschale (10) nach einem der vorstehenden Ansprüche, **dadurch gekennzeichnet, dass** das Innenprofil (24) und/oder die Führungsleiste (22) eine elektrisch leitfähige Verbindung zwischen der Komponente (30) und der Fahrzeugmasse aufweist.

9. Traktionsbatterie, insbesondere Traktionsbatterie für ein Kraftfahrzeug, aufweisend eine Batterieschale (10) nach einem der Ansprüche 1 bis 8.

10. Kraftfahrzeug aufweisend eine Batterieschale (10) nach einem der Ansprüche 1 bis 8.

## Claims

1. Battery shell (10), in particular battery shell (10) of a traction battery, the battery shell (10) being formed from plastics material, the battery shell (10) having a fastening system (20) for fastening a component (30) to the battery shell (10), **characterized in that**
the fastening system (20) has a guide rail (22), an inner profile (24) and a fastening element (26), the guide rail (22) being integrally and/or interlockingly connected to the battery shell (10), the inner profile (24) being guided by the guide rail (22), the fastening element (26) being designed to establish a connection between the component (30) and the inner profile (24).

2. Battery shell (10) according to claim 1, **characterized in that** the battery shell (10) is produced using an injection molding process or a pressing process or a blow molding process.

3. Battery shell (10) according to either claim 1 or claim 2, **characterized in that** the guide rail (22) has a proportion of at least 90 wt.% metal, preferably a proportion of at least 95 wt.% metal, particularly preferably a proportion of at least 98 wt.% metal.

4. Battery shell (10) according to either claim 1 or claim 2, **characterized in that** the guide rail (22) has a proportion of at least 90 wt.% plastics material, preferably a proportion of at least 95 wt.% plastics material, particularly preferably a proportion of at least 98 wt.% plastics material.

5. Battery shell (10) according to any of the preceding claims, **characterized in that** the inner profile (24) has a proportion of at least 90 wt.% metal, preferably a proportion of at least 95 wt.% of metal, particularly preferably a proportion of at least 98 wt.% metal.

6. Battery shell (10) according to any of the preceding claims, **characterized in that** at least one fastening element (26) is pressed into the inner profile (24).

7. Battery shell (10) according to any of the preceding claims, **characterized in that** the inner profile (24) has, relative to the guide rail (22), at least one translational degree of freedom (40, 42), preferably at least two translational degrees of freedom (40, 42), particularly preferably three translational degrees of freedom (40, 42).

8. Battery shell (10) according to any of the preceding claims, **characterized in that** the inner profile (24) and/or the guide rail (22) has an electrically conductive connection between the component (30) and the vehicle mass.

9. Traction battery, in particular traction battery for a motor vehicle, having a battery shell (10) according to any of claims 1 to 8.

10. Motor vehicle having a battery shell (10) according to any of claims 1 to 8.

## Revendications

1. Coque de batterie (10), en particulier coque de batterie (10) d'une batterie de traction, la coque de batterie (10) étant moulée en plastique, la coque de batterie (10) présentant un système de fixation (20) pour fixer un composant (30) à la coque de batterie (10),
**caractérisée en ce que**
le système de fixation (20) comprend une barre de guidage (22), un profilé intérieur (24) et un élément de fixation (26), la barre de guidage (22) étant reliée par liaison de matière et/ou par liaison de forme à la coque de batterie (10), le profilé intérieur (24) étant guidé par la barre de guidage (22), l'élément de fixation (26) étant agencé pour établir une liaison entre le composant (30) et le profilé intérieur (24).

2. Coque de batterie (10) selon la revendication 1, **caractérisée en ce que** la coque de batterie (10) est fabriquée par un procédé de moulage par injection ou un procédé de pressage ou un procédé de moulage par soufflage.

3. Coque de batterie (10) selon l'une quelconque des revendications 1 ou 2, **caractérisée en ce que** la barre de guidage (22) présente une proportion d'au moins 90 % en poids de métal, de préférence une proportion d'au moins 95 % en poids de métal, de manière particulièrement préférée une proportion d'au moins 98 % en poids de métal.

4. Coque de batterie (10) selon l'une quelconque des revendications 1 ou 2, **caractérisée en ce que** la barre de guidage (22) présente une proportion d'au moins 90 % en poids de matière plastique, de préférence une proportion d'au moins 95 % en poids de matière plastique, de manière particulièrement préférée une proportion d'au moins 98 % en poids de matière plastique.

5. Coque de batterie (10) selon l'une quelconque des revendications précédentes, **caractérisée en ce que** le profilé intérieur (24) présente une proportion d'au moins 90 % en poids de métal, de préférence une proportion d'au moins 95 % en poids de métal, de manière particulièrement préférée une proportion d'au moins 98 % en poids de métal.

6. Coque de batterie (10) selon l'une quelconque des revendications précédentes, **caractérisée en ce qu'**au moins un élément de fixation (26) est pressé dans le profilé intérieur (24).

7. Coque de batterie (10) selon l'une quelconque des revendications précédentes, **caractérisée en ce que** le profilé intérieur (24) présente, par rapport à la barre de guidage (22), au moins un degré de liberté en translation (40, 42), de préférence au moins deux degrés de liberté en translation (40, 42), de manière particulièrement préférée trois degrés de liberté en translation (40, 42).

8. Coque de batterie (10) selon l'une quelconque des revendications précédentes, **caractérisée en ce que** le profilé intérieur (24) et/ou la barre de guidage (22) présente une liaison électriquement conductrice entre le composant (30) et la masse du véhicule.

9. Batterie de traction, en particulier batterie de traction pour un véhicule automobile, comprenant une coque de batterie (10) selon l'une quelconque des revendications 1 à 8.

10. Véhicule automobile présentant une coque de batterie (10) selon l'une quelconque des revendications 1 à 8.
